Europäisches Patentamt

European Patent Office

Office européen des brevets

(11) Numéro de publication: **0 085 613 B1**

# (12) FASCICULE DE BREVET EUROPEEN

(45) Date de publication du fascicule du brevet:
23.04.86

(21) Numéro de dépôt: 83400183.6

(22) Date de dépôt: 27.01.83

(51) Int. Cl.⁴: **B 23 Q 3/08**

(54) **Dispositif de maintien d'une pièce à usiner.**

(30) Priorité: **03.02.82 FR 8202015**

(43) Date de publication de la demande:
**10.08.83 Bulletin 83/32**

(45) Mention de la délivrance du brevet:
**23.04.86 Bulletin 86/17**

(84) Etats contractants désignés:
**DE GB IT**

(56) Documents cités:
**EP - B - 0 003 244**
**DE - A - 1 552 701**
**DE - A - 1 552 711**
**FR - A - 2 196 877**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Lombard, René, 55, avenue Franklin Roosevelt, F-77290 Mitry-le-Neuf (FR)**

(74) Mandataire: **Boivin, Claude, 9, rue Edouard-Charton, F-78000 Versailles (FR)**

## Description

La présente invention concerne un dispositif pour maintenir une pièce pendant une opération d'usinage, par exemple une bielle pendant son rodage.

Le brevet DE-A-1552711 décrit un dispositif comprenant dans ce but une première pièce d'appui fixe et une seconde pièce d'appui qui est mobile par rapport à la première dans la direction d'usinage et permet de maintenir la pièce à usiner sur la première pièce d'appui, cette seconde pièce d'appui faisant partie d'un ensemble mobile comprenant l'un des éléments cylindre-piston d'un vérin dont l'autre élément est fixe. Ce document a servi de base pour l'élaboration du préambule de la revendication 1. Mais ce dispositif ne permet pas un réglage facile de la pression de serrage de la pièce.

Or, lors de l'usinage d'une pièce, il est fréquemment nécessaire de la maintenir dans la direction d'usinage, tout en lui laissant une certaine liberté transversale pour lui permettre de se centrer par rapport à l'outil d'usinage.

La présente invention a pour objet un dispositif de maintien conçu à cet effet.

Le dispositif selon l'invention est caractérisé en ce que l'ensemble mobile comprend en outre un système de vis différentielles constitué par deux vis, de pas différents, vissées dans des taraudages coasciaux d'un pignon à denture droite en prise avec une crémaillère attelée à un vérin, les deux vis étant solidaires en translation réspectivement de l'élément mobile du vérin et de la seconde pièce d'appui, des moyens pour bloquer en position d'élément mobile du vérin, et des moyens pour faire pivoter le pignon d'un angle déterminé.

Dans une variante, le dispositif est caractérisé en ce que l'ensemble mobile comprend un système de vis différentielles constitué par un pignon à denture droite qui est en prise avec une crémaillère attelée à un vérin et porte deux parties filetées coaxiales, de pas différents, vissées dans des taraudages solidaires en translation respectivement de l'élément mobile du vérin et de la seconde pièce d'appui, des moyens pour bloquer en position d'élément mobile du vérin, et des moyens pour faire pivoter le pignon d'un angle déterminé.

Pour maintenir la pièce à usiner, on allonge le vérin de sorte que celle-ci est serrée entre les deux pièces d'appui. Puis on bloque en position l'élément mobile du vérin et on fait pivoter le pignon, de manière à rapprocher la seconde pièce d'appui de l'élément mobile du vérin. On donne ainsi à la pièce à usiner un jeu défini, et qui peut par exemple, être de 1 à 2 centièmes de millimètres.

Les moyens pour bloquer en position l'élément mobile du vérin sont avantageusement constitués, par une bague de serrage à commande par fluide sous pression.

On a décrit ci-après, à titre d'exemple non limitatif, un mode de réalisation du dispositif de maintien selon l'invention, avec référence aux dessins annexés dans lesquels:

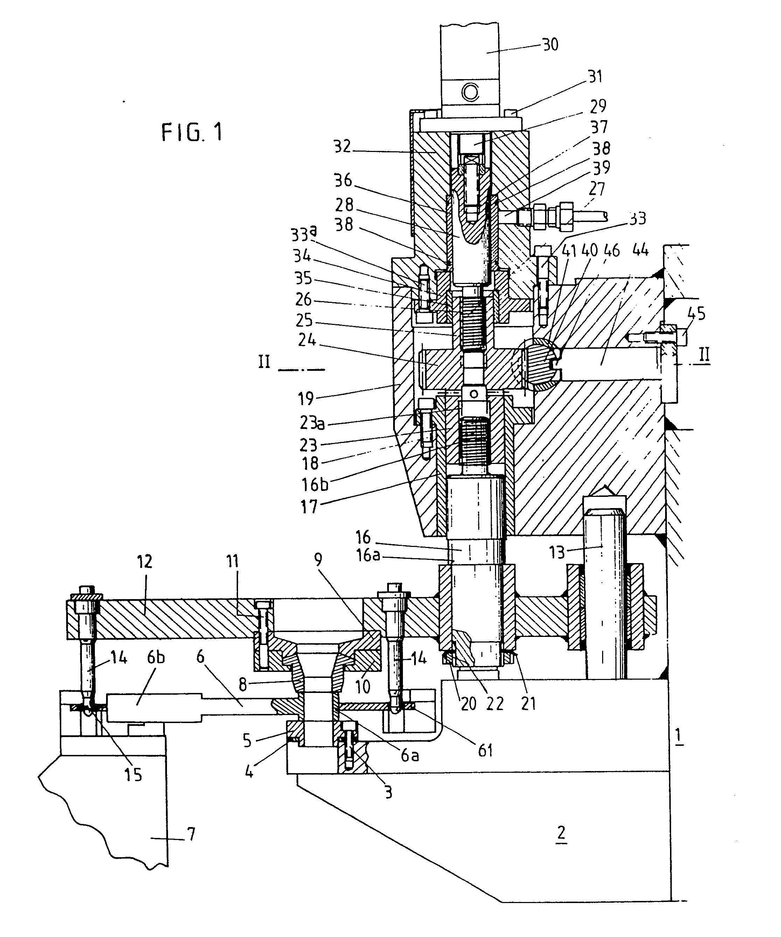

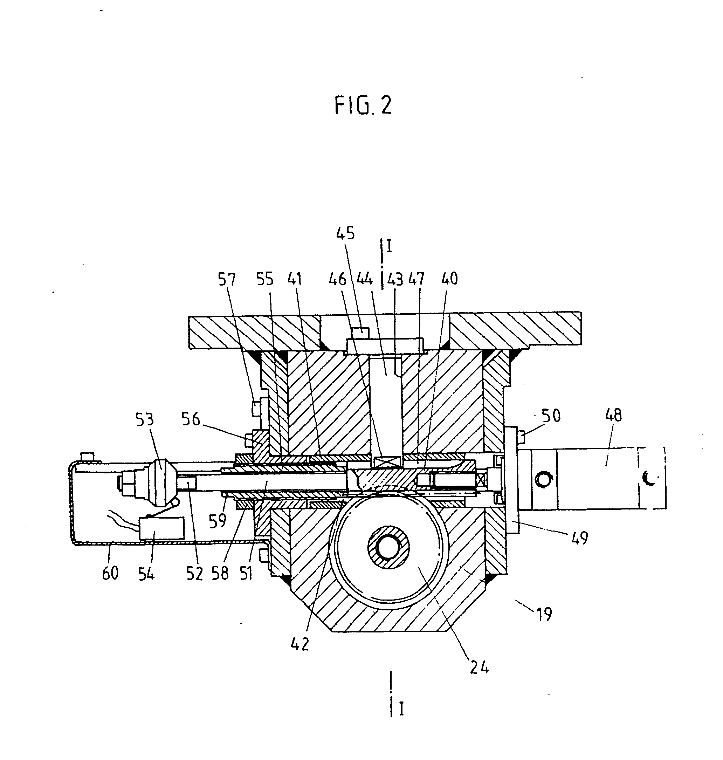

Fig. 1 est une vue en coupe verticale du dispositif selon I–I de la fig. 2;

Fig. 2 en est une coupe horizontale suivant II–II de la fig. 1.

Tel qu'il est représenté au dessin, l'appareil comprend un bâti 1 qui est solidaire d'une console 2. Sur cette console est fixée par des vis 3, avec interposition d'une cale de mise à niveau 4, une pièce d'appui inférieure 5 pour le pied 6a d'une bielle 6. La tête 6b de la bielle repose sur la table du bâti 7 d'une machine à roder, qui est solidarisée avec le bâti 1 par des moyens non représentés au dessin.

Le pied 6a de la bielle est maintenu sur la pièce d'appui 5 par une pièce d'appui supérieure 8 dont la face supérieure est sphérique est au contact d'une rotule 9 de même rayon de courbure. Celle-ci est maintenue par un couvercle 10 et des boulons 11 sur un masque 12, avec un jeu suffisant pour permettre le débattement de la pièce d'appui 8. Le masque 12 est monté coulissant sur un axe 13. Il supporte deux doigts 14, venant s'engager dans deux lumières 15 situées dans une plaque 16 silhouettant le profil extérieur de la bielle, afin de prépositionner la bielle dans l'axe du poste de travail.

Le masque 12 est fixé à la partie inférieure d'un arbre de commande 16 qui est monté coulissant dans un fourreau 17 fixé par des vis 18 dans un bâti 19 solidaire du bâti 1. Le masque est maintenu en appui contre un épaulement 16a de l'arbre par un écrou à encoches 20, avec interposition d'une rondelle de freinage 21. Cette rondelle est engagée dans une rainure longitudinale 22 de l'arbre 16 et comporte und patte de blocage rabattue dans l'une des encoches de l'écrou 20; tout pivotement relatif entre le masque 13 et l'arbre 16 est ainsi empêché.

La partie supérieure 16b de l'arbre 16 a un diamètre réduit et est filetée. Cette partie filetée est engagée dans un alésage taraudé 23a pratiqué dans un tourillon 23 d'un pignon 24; ce tourillon est engagé dans le fourreau 17 dans lequel il peut se déplacer. Le pignon 24 comporte, du côté opposé au tourillon 23, un second tourillon 25 muni d'un alésage taraudé 26 dont le pas est légèrement différent de celui de l'alésage taraudé 23a, mais de même sens que lui. Dans le taraudage 26 est engagé un élément mâle fileté 27 terminant un embout 28 qui est fixé au piston 29 d'un vérin 30. Ce vérin est fixé par des vis 31 sur un palier 32 lui-même fixé par des vis 33 sur le bâti 19; un chapeau 34 est fixé par des vis 33a sous le palier 32. Le tourillon 25 peut coulisser a l'intérieur d'une bague auto-lubrifiante 35 emmanchée dans le chapeau 34. L'élément 27 et la partie 16b de l'arbre 16 étant empêchés de tourner, le pivotement du pignon 24 entraîne un déplacement axial relatif de l'arbre 16 et de l'embout 28 du fait de la différence de pas des filetages.

Une bague de serrage de type connu 36, est fixée dans un alésage du palier 32, entre un épaulement 37 de ce palier et le chapeau 34. Cette bague est munie à ses extrémités de joints toriques d'étanchéité 38. En regard de cette bague, le palier 3 comporte un perçage 39 qui peut être mis en communication avec une source de fluide sous pression, ce qui a pour effet d'immobiliser l'embout 28 du vérin.

Le pignon 24 est à denture droite et en prise avec une crémaillère 40 logée dans un fourreau 41. Celui-ci est muni d'une ouverture 42 pour le passage du pignon 24 et d'une ouverture 43 pour le passage d'un axe 44 qui est fixé au bâti 19 par des boulons 45 et se termine par une partie plate 46 engagée dans une rainure 47 de la crémaillère 40 en interdisant ainsi tout mouvement de rotation à la crémaillère.

La crémaillère 40 est attachée à la tige du piston d'un vérin 48 fixé au bâti 19 par sa plaque 49 et des boulons 50. Elle est prolongée par un axe 51 dont l'extrémité filetée 52 porte une came 53 actionnant des contacteurs tels que 54 qui agissent sur des circuits de commande.

L'axe 51 traverse une bague 55 qui est filetée extérieurement et fixée dans un chapeau 56 fixé au bâti 19 par des boulons 57. Cette bague, contre laquelle la crémaillère vient buter lors de l'actionnement du vérin 48, limite la course de la crémaillère, cette course pouvant ainsi être réglée par manoeuvre de la bague. Un écrou 58 vissé sur la bague 55 permet de bloquer cette bague dans la position désirée. Les références 59 et 60 désignent respectivement une bague auto-lubrifiante montée entre l'axe 51 et la bague 55, et un capot qui protège la came 53 et les contacteurs 54.

Le dispositif de maintien qui vient d'être décrit, fonctionne de la manière suivante.

Le pied 6a de la bielle 6 ayant été placé sur la pièce d'appui inférieure 5, on admet la pression dans le vérin 30 de sorte que l'ensemble constitué par l'embout 28, le pignon 24, l'arbre 16, le masque 12, la rotule 9, l'appui supérieur 8 et le couvercle 10 se déplace vers le bas jusqu'à ce que l'appui supérieur 8 soit en butée contre le pied de bielle 6a; ce mouvement est possible malgré la présence du pignon 24 car celui-ci étant à denture droite peut débattre librement par rapport à la crémaillère 40.

On admet ensuite la pression dans la bague de serrage 36, ce qui a pour effet de maintenir en position l'embout 28.

Enfin, on admet la pression dans le vérin 48. La crémaillère 40 se déplace ainsi jusqu'à ce qu'elle soit en butée contre la vis 55.

Le pignon 24, entraîné par la crémaillère 40 pivote, ce qui provoque un déplacement relatif des arbres 16 et 28. L'embout 28 étant immobilisé par la bague 36, l'arbre 16 se déplace vers le haut, ce qui débride le pied de bielle 6a.

## Revendications

1. Dispositif pour maintenir une pièce pendant une opération d'usinage, qui comprend une première pièce d'appui fixe (5) et une seconde pièce d'appui (8) qui est mobile par rapport à la première dans la direction d'usinage et permet de maintenir la pièce à usiner (6) sur la première pièce d'appui (5), cette seconde pièce d'appui (8) faisant partie d'un ensemble mobile comprenant l'un des éléments cylindre-piston d'un vérin (30) dont l'autre élément est fixe, caractérisé en ce que l'ensemble mobile comprend en outre un système de vis différentielles (23, 24, 25) constitué par deux vis (16a et 25), de pas différents, vissées dans des taraudages coasciaux (23a et 26) d'un pignon à denture droite (24) en prise avec une crémaillère (40) attelée à un vérin (48), les deux vis étant solidaires en translation respectivement de l'élément mobile du vérin (30) et de la seconde pièce d'appui (8), des moyens (36) pour bloquer en position d'élément mobile du vérin, et des moyens (40–48) pour faire pivoter le pignon (24) d'un angle déterminé.

2. Dispositif pour maintenir une pièce pendant une opération d'usinage, qui comprend une première pièce d'appui fixe (5) et une seconde pièce d'appui (8) qui est mobile par rapport à la première dans la direction d'usinage et permet de maintenir la pièce à usiner (6) sur la première pièce d'appui (5), cette seconde pièce d'appui faisant partie d'un ensemble mobile comprenant en outre l'un des éléments cylindre-piston d'un vérin (30) dont l'autre élément est fixe, caractérisé en ce que l'ensemble mobile comprend en outre un système de vis différentielles constitué par un pignon à denture droite (24) qui est en prise avec une crémaillère (40) attelée à vérin (48) et porte deux parties filetées coaxiales, de pas différents, vissées dans des taraudages solidaires en translation respectivement de l'élément mobile du vérin (30) et de la seconde pièce d'appui (8), des moyens (36) pour bloquer en position l'élément mobile du vérin, et des moyens (40–48) pour faire pivoter le pignon (24) d'un angle déterminé.

3. Dispositif selon la revendication 1 ou 2, caractérisé en ce que les moyens pour bloquer en position l'élément mobile du vérin sont constitués par une bague de serrage à commande par fluide sous pression.

4. Dispositif selon l'une des revendications précédentes, caractérisé en ce que la face extérieure de la pièce d'appui supérieure (8) est sphérique et au contact d'un élément de rotule de même rayon de courbure.

5. Dispositif selon l'une des revendications précédentes, caractérisé par une butée réglable (55) pour la crémaillère (40).

## Patentansprüche

1. Haltevorrichtung für ein maschinell zu bearbeitendes Werkstück mit einem ersten, feststehenden Stützteil (5) und einem relativ zum ersten Stützteil in Bearbeitungsrichtung beweglichen zweiten Stützteil (8), mit dem das Werkstück (6) am ersten Stützteil (5) halterbar ist, wobei das zweite Stützteil (8) zu einem beweglichen Aufbau gehört, der zusätzlich das eine Element eines Zylinder-Kolbenstellantriebs (30) umfasst, dessen anderes Element festgelegt ist, dadurch gekennzeichnet, dass der bewegliche Aufbau zusätzlich eine Differenzialschraubenanordnung (23, 24, 25) mit zwei Schrauben (16a, 25) unterschiedlicher Ganghöhe umfasst, die in koaxiale Innengewinde (23a, 26) eines geradverzahnten Stirnrades (24) eingeschraubt sind, das im Eingriff mit einer an einen Stellantrieb (48) angeschlossenen Zahnstange (40) steht, wobei die beiden Schrauben der Translation des beweglichen Elementes des Stellantriebs (30) und des zweiten Stützteils (8) gemeinsam unterworfen sind, eine Verriegelungseinrichtung (36) für die Stellung des beweglichen Elementes des Stellantriebs und eine Dreheinrichtung (40–48) zum Drehen des Stirnrades um einen vorbestimmten Winkel.

2. Haltevorrichtung für ein maschinell zu bearbeitendes Werkstück mit einem ersten, feststehenden Stützteil (5) und einem relativ zum ersten Stützteil in Bewegungsrichtung beweglichen zweiten Stützteil (8), mit dem das Werkstück (6) am ersten Stützteil (5) halterbar ist, wobei das zweite Stützteil zu einem beweglichen Aufbau gehört, der zusätzlich das eine Element eines Zylinder-Kolbenstellantriebs (30) umfasst, dessen anderes Element festgelegt ist, dadurch gekennzeichnet, dass der bewegliche Aufbau zusätzlich eine Differenzialschraubenanordnung umfasst, die aus einem geradverzahnten Stirnrad (24) besteht, das im Eingriff mit einer an einen Stellantrieb (48) angeschlossenen Zahnstange (40) steht und zwei koaxiale mit Aussengewinde unterschiedlicher Ganghöhe versehene Teile trägt, die in Innengewinde eingeschraubt sind, die der Translation des beweglichen Elements des Stellantriebs (30) und des zweiten Stützteils (8) gemeinsam unterworfen sind, eine Verriegelungseinrichtung (36) für die Stellung des beweglichen Elements des Stellantriebs und eine Dreheinrichtung (40–48) zum Drehen des Stirnrades um einen vorbestimmten Winkel.

3. Haltevorrichtung nach Anspruch 1 oder 2, dadurch gekennzeichnet, dass die Verriegelungseinrichtung für die Stellung des beweglichen Elements des Stellantriebes aus einem fluiddruckgesteuerten Schwindring besteht.

4. Haltevorrichtung nach einem der vorangegangenen Ansprüche, dadurch gekennzeichnet, dass die Aussenfläche des oberen Stützteils (8) sphärisch ausgebildet ist und in Kontakt mit einem Kugelkopf gleichen Krümmungsradius steht.

5. Haltevorrichtung nach einem der vorangegangenen Ansprüche, gekennzeichnet durch ein einstellbares Längslager (55) für die Zahnstange (40).

## Claims

1. A device for holding a work piece during a machining operation, which comprises a first fixed bearing piece (5) and a second bearing piece (8) which is movable with respect to the first one in the machining direction and allows the work piece (6) to be held on the first bearing piece (5), this second bearing piece (8) forming part of a mobile assembly comprising one of the cylinder-piston elements of an actuating cylinder (30) whose other element is fixed, characterized in that the mobile assembly further comprises a differential screw system (23, 24, 25) formed by two screws (16a and 25), of different pitches, screwed into coaxial tappings (23a and 26) of a pinion with straight teeth (24) engaged with a rack (40) coupled to an actuating cylinder (48), the two screws being locked in translation respectively with the mobile element of the actuating cylinder (30) and with the second bearing piece (8) of the means (36) for locking the mobile element of the actuating cylinder in position and means (40–48) for causing the pinion (24) to pivot through a given angle.

2. Device for holding a work piece during a machining operation, which comprises a first fixed bearing piece (5) and a second bearing piece (8) which is movable with respect to the first one in the machining direction and allows the work piece (6) to be held on the first bearing piece (5), this second bearing piece forming part of a mobile assembly comprising in addition one of the cylinderpiston elements of an actuating cylinder (30) whose other element is fixed, characterized in that the mobile assembly further comprises a differential screw system formed by a pinion with straight teeth (24) which is engaged with a rack (40) coupled to an actuating cylinder (48) and comprises two coaxial threaded portions, of different pitches, screwed into tappins locked in translation respectively with the mobile element of the actuating cylinder (30) and with the second bearing piece (8), means (36) for locking the mobile element of the actuating cylinder in position and means (40–48) for causing the pinion (24) to pivot through a given angle.

3. Device according to claim 1 or 2, characterized in that the means for locking the mobile element of the actuating cylinder in position are formed by a clamping ring with pressurized fluid control.

4. Device according to one of the preceding claims, characterized in that the external face of the upper bearing piece (8) is spherical and in contact with a ball joint element having the same radius of curvature.

5. Device according to one of the preceding claims, characterized by an adjustable stop (55) for the rack (40).

FIG. 1

# FIG. 2